# EUROPÄISCHE PATENTSCHRIFT

(11) **EP 0 260 397 B1**
(45) Veröffentlichungstag und Bekanntmachung des Hinweises auf die Patenterteilung: **06.10.1993**
(21) Anmeldenummer: 87109867.9
(22) Anmeldetag: 08.07.1987
(51) Int. Cl.: G09G 3/04

(54) **Vorrichtung zur Sichtdarstellung von Informationsinhalten**
Data display device
Dispositif d'affichage de données

(30) Priorität: 13.08.1986 DE 3627394
(43) Veröffentlichungstag der Anmeldung: 23.03.1988
(73) Patentinhaber: Mettler-Toledo (Albstadt) GmbH, 72458 Albstadt (DE)
(72) Erfinder: Hermann, Bernhard, D-7464 Schömberg 1 (DE); Mürdter, Herbert, D-7470 Albstadt 2-Tailfingen (DE); Ehresmann, Walter, D-7470 Albstadt 2-Tailfingen (DE); Kammerer, Manfred, D-7470 Albstadt 1-Ebingen (DE)
(74) Vertreter: Patentanwälte Leinweber & Zimmermann

(56) Entgegenhaltungen:
- EP-A- 0 092 915
- EP-A- 0 153 738
- LU-A- 84 046
- US-A- 4 341 197
- US-A- 4 351 033

## Beschreibung

Die Erfindung bezieht sich auf eine Vorrichtung zur Sichtdarstellung von Informationsinhalten auf einem eine Mehr-Segment-Balken-Anzeige mit einem Block von mehreren in einer Zeile angeordneten, alphanumerischen Sieben-Segment-Anzeigestellen aufweisenden Anzeigefeld, bei der die Segment-Balken in Abhängigkeit von den anzuzeigenden Informationsinhalten selektiv zu deren Anzeige ansteuerbar sind, wobei einzelnen Segment-Balken auf dem Anzeigefeld je eine einen bestimmten Informationsinhalt darstellende, permanente Markierung zugeordnet und jeweils der der entsprechenden Markierung zugeordnete Segment-Balken zur Anzeige des ihr entsprechenden Informationsinhaltes ansteuerbar ist.

Bei einer derartigen bekannten Vorrichtung (US-A-4 341 197), die zur Anzeige von Funktionen und Betriebswerten, wie Temperatur und Garzeit, eines Kochherdes bestimmt ist, weist die Mehr-Segment-Balken-Anzeige außer den Segment-Balken der Sieben-Segment-Anzeigestellen weitere Segment-Balken auf, denen die permanenten Markierungen des Anzeigefeldes mittels von dort ausgehenden Hinweislinien zugeordnet sind. Im einzelnen handelt es sich bei diesen permanenten Markierungen um Klartextangaben, deren Bedeutungsinhalt den jeweils anzuzeigenden Informationsinhalt wiedergibt. Hierdurch können zwar bei der bekannten Vorrichtung über die jeweils momentan durch die alphanumerischen Sieben-Segment-Anzeigestellen anzeigbaren Informationsinhalte hinaus selektiv auch solche Informationsinhalte dargestellt werden, denen jeweils eine der permanenten Markierungen zugeordnet ist. Doch wird hierzu ein zusätzlicher Satz von Segment-Balken benötigt, was den baulichen Aufwand ganz erheblich erhöht. Denn es müssen nicht nur spezielle Mehr-Segment-Balken-Anzeigen zur Anwendung kommen, die außer den zur alphanumerischen Darstellung erforderlichen sieben Segmenten noch zusätzliche Segmente enthalten, sondern es entsteht durch das Erfordernis der zusätzlichen Segment-Balken auch ein erhöhter Raumbedarf und zusätzlicher Aufwand für die Ansteuerung dieser zusätzlichen Segmente.

Ferner ist ein Anzeigefeld für eine Waage bekannt (EP-A-0 092 915), das außer fünf numerischen Anzeigestellen zur Anzeige digitaler Gewichtswerte auch noch einen analogen Anzeige-Balken aufweist. Dieser dient zur optischen Darstellung des Wertzuwachses der niedrigwertigen Anzeigestellen des numerischen Anzeigefeldes, wodurch bei Füllvorgängen die Annäherung an einen Sollwert anschaulicher überwacht werden kann, als lediglich durch Ablesung der rasch veränderlichen niedrigwertigen numerischen Anzeigestellen. Um dem Benutzer gleichzeitig anzeigen zu können, welche der numerischen Anzeigestellen durch den analogen Anzeigebalken wiedergegeben werden, ist über den einzelnen numerischen Anzeigestellen jeweils ein zusätzlicher Segment-Balken angeordnet, durch dessen Ansteuerung angezeigt wird, daß die ihm zugeordnete Anzeigestelle auch durch den analogen Anzeigebalken dargestellt wird. Auch in diesem Falle sind also für die Anzeige eines über die numerischen Informationsinhalte des Anzeigefeldes hinausgehenden Informationsinhaltes zusätzliche Segment-Balken erforderlich.

Der Erfindung liegt die Aufgabe zugrunde, eine Vorrichtung zur Sichtdarstellung der eingangs genannten Art, durch die bereits eine übersichtliche Darstellung einer ganzen Folge von Informationsinhalten möglich ist und die eine schnelle und einfache Auswahl der Informationsinhalte aus der darzustellenden Gesamtmenge ermöglicht, baulich zu vereinfachen.

Erfindungsgemäß wird diese Aufgabe dadurch gelöst, daß die Markierungen den den Block nach außen begrenzenden Segment-Balken der Sieben-Segment-Anzeigestellen zugeordnet sind.

Da die Markierungen den äußeren Segment-Balken der Sieben-Segment-Anzeigestellen zugeordnet sind, benötigt die erfindungsgemäße Vorrichtung keine zusätzlichen Segment-Balken, sondern kommt allein mit einer herkömmlichen Sieben-Segment-Balken-Anzeige aus, welche die zur Darstellung alphanumerischer Information minimale Anzahl von Segment-Balken aufweist. Es entsteht daher kein zusätzlicher Aufwand und/oder Platzbedarf für zusätzliche Segment-Balken. Trotz des Verzichts auf zusätzliche Segment-Balken entstehen keinerlei Schwierigkeiten hinsichtlich der Erkennung der dargestellten Informationsinhalte. Denn zur Darstellung der den Markierungen entsprechenden Informationsinhalte werden lediglich die jeweils äußeren Segment-Balken der Sieben-Segment-Anzeigestellen angesteuert, und man erkennt, daß derartigen Anzeigemustern weder Zahlen noch Buchstaben zugeordnet sind. Damit ist für den Betrachter der Vorrichtung klar, daß Anzeigemuster, bei denen nur die äußeren Segment-Balken der alphanumerischen Sieben-Segment-Anzeigestellen angesteuert sind, den Markierungen zugeordnet sind. Sind dagegen auch innere Segment-Balken angesteuert, handelt es sich erkennbar um alphanumerische Informationsinhalte, also Zahlen oder Buchstaben. Trotz dieser Doppelbelegung der Sieben-Segment-Anzeigestellen kann also zu jedem Zeitpunkt erkannt werden, ob gerade die den Markierungen entsprechenden Informationsinhalte zur Anzeige gelangen oder solche Informationsinhalte, die durch die alphanumerischen Anzeigemuster der Anzeigeelemente wiedergegeben werden.

Durch die erfindungsgemäße Ausbildung kann also mit einer einfachen Mehr-Segment-Balken-Anzeige aus alphanumerischen Sieben-Segment-Anzeigestellen, die normalerweise lediglich zur Sichtdarstellung eines einzigen kurzen, zusammenhängenden Informationsinhaltes, wie einige Ziffern und/oder Buchstaben, verwendet wird, in übersichtlicher Weise die Gesamtmenge der benötigten Informationsinhalte dargestellt werden, da diese in Form der permanenten Markierungen dauerhaft auf dem Anzeigefeld sichtbar ist. Es bedarf somit zur Sichtdarstellung jedes der Informationsinhalte nur der Ansteuerung eines einzigen, der entsprechenden Markierung zugeordneten Segment-Balkens, wodurch die Kapazität der Mehr-Segment-Balken-Anzeige für eine gleichzeitige und übersichtliche Darstellung einer größeren Menge von Informationsinhalten erheblich erhöht ist. Der Benutzer überschaut anhand der permanenten Markierungen einerseits die Gesamtmenge der zur Verfügung stehenden Informationsinhalte und erhält durch den gerade angesteuerten Segment-Balken gleichzeitig Kenntnis von dem gerade aufgerufenen oder angewählten Informationsinhalt. Hierdurch ist eine Dialogführung möglich, wie sie sonst nur mittels der viel aufwendigeren Bildschirmgeräte erreichbar wäre.

Die den Markierungen zugeordneten Segment-Balken begrenzen den Block der alphanumerischen Sieben-Segment-Anzeigestellen nach außen und grenzen damit unmittelbar an die freie Fläche des Anzeigefeldes an, auf der genügend Platz zur Anbringung der Markierungen in der unmittelbaren Nachbarschaft der äußeren Segment-Balken vorhanden ist. Beispielsweise können die Markierungen aus je einem einzigen Klartextwort bestehen, das den anzuzeigenden Informationsinhalt schlagwortmäßig kennzeichnet.

Eine vorteilhafte Ausführungsform der Erfindung besteht darin, daß die permanenten Markierungen auf einer an der Mehr-Segment-Balken-Anzeige auswechselbar angebrachten Maske angeordnet sind. Durch Auswechseln der Masken kann ein praktisch unbegrenzter Vorrat an Informationsinhalten teilmengenweise den Segment-Balken zugeordnet werden, so daß bei einer unter Berücksichtigung der gerade aufgelegten Maske erfolgenden Ansteuerung der Sichtanzeige sehr große Informationsmengen übersichtlich dargestellt und bearbeitet werden können.

Eine weitere zweckmäßige Ausführungsform besteht darin, daß die den Markierungen zugeordneten Segment-Balken in einer geschlossenen Schleife geschaltet sind, in der die Ansteuerung von einem Segment-Balken zu dem in der Schleife benachbarten Segment-Balken durch ein Fortschaltsignal weiterschaltbar ist. Da durch die geschlossene Schleife ein Richtungssinn festgelegt ist, längs dem die Fortschaltung der Segment-Balken-Ansteuerung fortschreitet, ist für den Benutzer mit einem Blick der gesamte Dialogverlauf, also die bereits zurückgelegten Dialogschritte, der augenblickliche Stand und die zukünftigen Dialogschritte überschaubar.

Im Rahmen der Erfindung ist auch vorgesehen, die Vorrichtung zur Sichtdarstellung von Informationsinhalten derart auszubilden, daß die Anzeigestellen der Sichtanzeige in mindestens zwei Gruppen unterteilt sind, in deren einer die jeweils einer permanenten Markierung zugeordneten Segment-Balken vorgesehen sind und in deren anderer die Ansteuerung der Segmentbalken gemäß in Abhängigkeit von dem gerade angesteuerten, einer der Markierungen zugeordneten Segment-Balken der einen Gruppe vorgegebenen Anzeigemustern erfolgt.

Mittels der betreffenden Segment-Balken in der einen Gruppe kann also wie bei den vorangegangenen Ausführungsformen jeweils ein bestimmter Informationsinhalt aus einer durch die permanenten Markierungen dauerhaft angezeigten Informationsmenge dargestellt werden. Gleichzeitig werden aber auch mittels der Segment-Balken der anderen Gruppe Anzeigemuster wiedergegeben, wobei diese Anzeigemuster eine Funktion des gerade angesteuerten Segment-Balkens in der einen Gruppe sind. Wenn beispielsweise im Falle einer elektronischen Waage einem einzelnen Segment-Balken in der einen Gruppe die voreinzustellende Höchstlast der Waage zugeordnet ist, so bedeuten die durch die Segment-Balken der anderen Gruppe wiedergegebenen Anzeigemuster verschiedene numerische Parameter für die Höchstlast.

Der Erfindungsgedanke erfährt seine Fortbildung bei einer Vorrichtung zur Sichtdarstellung von Informationsinhalten mit einer mit der Sichtanzeige gekoppelten Eingabetastatur dadurch, daß die Eingabetastatur eine Fortschalttaste aufweist, durch die die Ansteuerung von einem der einer Markierung zugeordneten Segment-Balken zu einem nächsten solchen Segment-Balken weiterschaltbar ist. Hierdurch ist ein interaktiver Benutzerdialog möglich. Dies bedeutet am Beispiel der elektronischen Waage, daß der Benutzer durch Betätigung der Fortschalttaste von dem gerade angesteuerten Segment-Balken, der die Höchstlasteinstellung kennzeichnet, beispielsweise auf einen nächsten Segment-Balken weiterschalten kann, der mit der Wahl der Maßeinheiten zusammenhängt.

Ebenso ist es für die Interaktionsfähigkeit zweckmäßig, daß die Eingabetastatur eine Quittiertaste aufweist, durch die ein Auswahlsignal für das auf der anderen Gruppe der Anzeigestellen gerade angezeigte Anzeigemuster erzeugbar ist. Am Beispiel der elektronischen Waage bedeutet dies, daß, sofern in der einen Gruppe der Anzeigestellen gerade der der Markierung "Höchstlast" zugeordnete Segment-Balken angesteuert ist, durch eine Betätigung der Quittiertaste ein erwünschter Zahlenwert für den Parameter "Höchstlast", wie er von der anderen Gruppe der Anzeigestellen gerade angezeigt wird, ausgewählt und damit voreingestellt werden kann.

In diesem Zusammenhang besteht eine vorteilhafte Möglichkeit darin, daß die Ansteuerung der vorgegebenen Anzeigemuster der anderen Gruppe von Anzeigestellen nacheinander mit einer vorgegebenen Geschwindigkeit erfolgt. Der Benutzer sieht somit die zur Auswahl stehenden Parameter langsam vor sich ablaufen und kann damit die Auswahl des gewünschten Parameters treffen.

Zweckmäßig ist dabei in einer weiteren Ausgestaltung der Erfindung vorgesehen, daß die Eingabetastatur eine Umschalttaste aufweist, durch die die Fortschalttaste zwischen ihrem der Weiterschaltung in der ersten Gruppe der Anzeigestellen dienenden Betriebszustand und einem der Weiterschaltung zwischen den in der zweiten Gruppe der Anzeigestellen vorgesehenen Anzeigemustern dienenden Betriebszustand umschaltbar ist. Durch diese Maßnahme ist es im Unterschied zu dem bei der vorstehenden Ausführungsform automatisch ablaufenden Dialog möglich, die Weiterschaltung durch den Benutzer auszuführen, wobei die Weiterschaltung in dem Dialogablauf sowohl vorwärts als auch rückwärts erfolgen kann.

Im Rahmen der Erfindung ist auch vorgesehen, daß die erfindungsgemäße Vorrichtung eine Speichereinrichtung aufweist, in der jeweils ein den in der einen Gruppe der Anzeigestellen angesteuerten Segment-Balken darstellendes Speichersignal zusammen mit einem dem durch das Auswahlsignal angewählten Anzeigemuster der anderen Gruppe der Anzeigestellen entsprechenden weiteren Speichersignal einspeicherbar ist. Damit ist das Ergebnis der im Dialog getroffenen Auswahl in der Form zweier miteinander verbundener Speichersignale in der Speichereinrichtung endgültig festhaltbar und steht damit beispielsweise als permanenter Betriebsparametersatz für eine elektronische Waage zur Verfügung.

Im Rahmen der Erfindung ist insbesondere vorgesehen, daß die Sichtanzeige mit einer Waage gekoppelt ist, in deren verschiedenen Bausteinen jeweils eine Anzahl von Parameterwerten einstellbar ist, und daß auf der ersten Gruppe der Anzeigestellen der jeweils zur Einstellung angewählte Baustein und auf der zweiten Gruppe der Anzeigestellen der jeweils auswählbare Parameterwert angezeigt wird.

Bei derartigen elektronisch gesteuerten Waagen, die einen modularen Aufbau aus einzelnen Bausteinen aufweisen, sind den Bausteinen innerhalb der gesamten Waage bestimmte Funktionen zugeordnet, wie beispielsweise die Meßwerterfassung, die Meßwertumformung, die Anzeige des Meßwertes, das Ausdrucken des Meßwertes und dgl. Zweckmäßig sind die einzelnen Bausteine zwischen verschiedenen Parametern umschaltbar ausgestaltet, beispielsweise zwischen verschiedenen Höchstlasten, Skalenunterteilungen oder dgl., so daß mit einer geringen Anzahl einzelner Bausteine eine große Anzahl unterschiedlicher Waagen hergestellt werden kann, die an die individuellen Bedürfnisse jedes Benutzers angepaßt sind.

Durch die Erfindung wird also die Konfiguration einer derartigen modular aufgebauten Waage für einen bestimmten Anwendungszweck erheblich erleichtert, weil die jeweils geeigneten Parameter der einzelnen Bausteine mit Hilfe der Sichtdarstellungsvorrichtung in übersichtlicher Weise aus den verfügbaren Parameterbereichen ausgewählt und voreingestellt werden können, damit im Benutzerbetrieb die Waage dann gemäß diesen voreingestellten Parametern arbeitet. Je mehr Bausteine vorhanden sind und je mehr Parameter in jedem einzelnen Baustein zur Auswahl stehen, um so wichtiger ist es, den Abruf und die Einstellung dieser Parameter mit Hilfe der Sichtanzeigevorrichtung zu kontrollieren.

Weitere Vorteile ergeben sich aus der folgenden Beschreibung, in der die Erfindung unter Bezugnahme auf die Zeichnung näher erläutert ist. Hierin zeigen:
- Fig. 1: eine elektronische Waage mit einer Sichtanzeige,
- Fig. 2: eine vergrößerte Aufsicht auf das Anzeigefeld der Sichtanzeige von Fig. 1, und
- Fig. 3: ein Blockschaltbild der in Fig. 1 und 2 dargestellten elektronischen Waage.

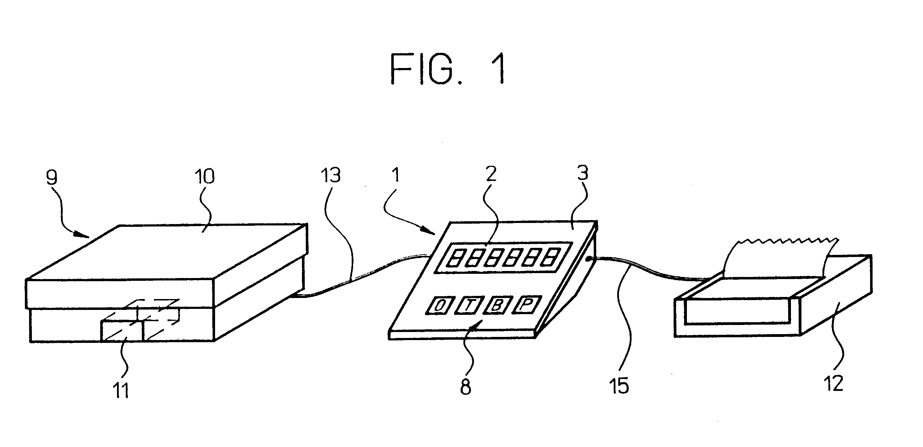

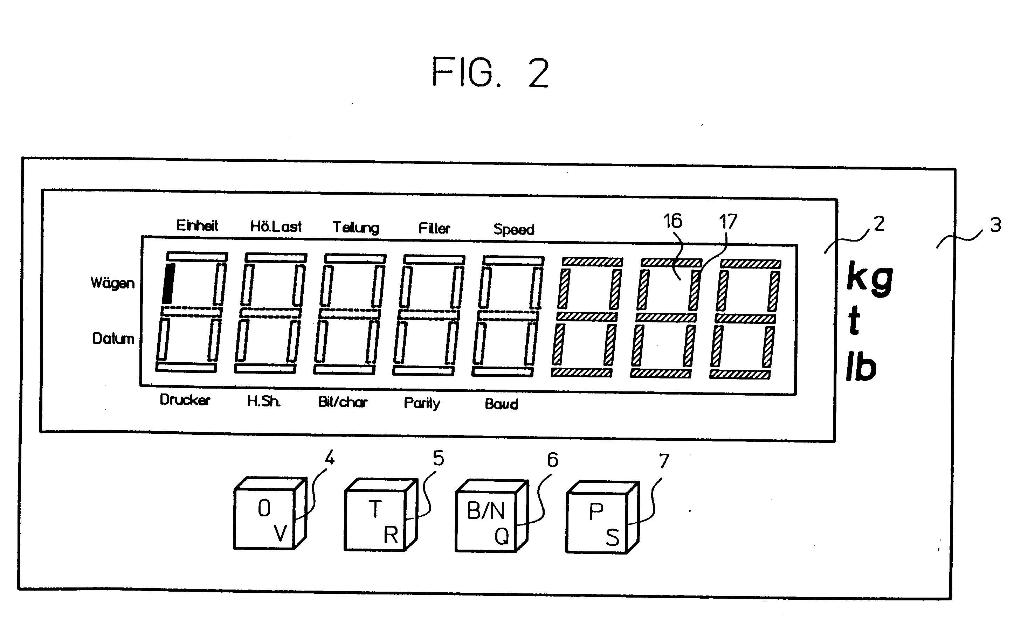

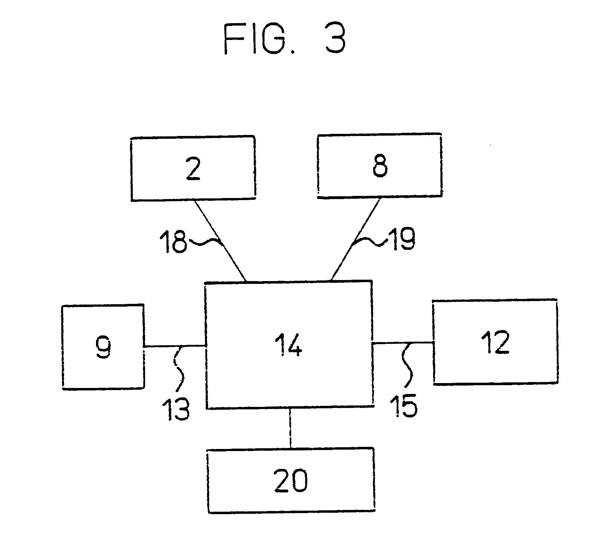

Gemäß Fig. 1 weist eine Vorrichtung 1 zur Sichtdarstellung von Informationsinhalten auf ihrer pultartig geneigten Vorderfläche 3 ein in Fig. 2 im einzelnen dargestelltes Anzeigefeld 2 sowie eine aus vier Tasten 4, 5, 6 und 7 bestehende Tastatur 8 auf. Wie ferner aus Fig. 1 und dem Blockschaltbild von Fig. 3 hervorgeht, bildet die Vorrichtung 1 einen Baustein einer modular aufgebauten elektronischen Wägeeinrichtung, die als weitere Bausteine eine mit einem Lastaufnehmer 10 und einem Lastfühler 11 versehene Waage 9 und einen Drucker 12 aufweist. Die Waage 9 ist über eine Signalverbindung 13 schnittstellenmäßig mit einem in Fig. 3 schematisch dargestellten Mikroprozessor 14 verbunden, an dem über eine weitere Signalleitung 15 auch der Drucker 12 schnittstellenmäßig angekoppelt ist.

Wie im einzelnen aus Fig. 2 hervorgeht, weist das Anzeigefeld 2 eine achtstellige Sieben-Segment-Balken-Anzeige auf, in der die acht alphanumerischen Anzeigestellen 16 je sieben selektiv ansteuerbare Segment-Balken 17 aufweisen. Im einzelnen erstrecken sich drei der Segment-Balken 17 unter einem vertikalen Abstand waagrecht, während die übrigen vier Segment-Balken 17 sich jeweils zwischen den Enden der waagrechten Segment-Balken 17 senkrecht erstrecken. Die selektive Ansteuerung der Segment-Balken 17 erfolgt, wie in dem Blockschaltbild von Fig. 3 schematisch angedeutet ist, durch den Mikroprozessor 14 über eine Signalverbindung 18. Wie nachfolgend noch im einzelnen beschrieben wird, erfolgt die selektive Ansteuerung der Segment-Balken 17 in Abhängigkeit von Eingaben durch die Tastatur 8, die gemäß Fig. 3 ebenfalls über eine Signalverbindung 19 mit dem Mikroprozessor 14 gekoppelt ist.

Die Waage 9 ist mit einem eigenen Mikroprozessor versehen, der bei entsprechenden Eingaben über die Signalleitung 13 eine Einstellung verschiedener Kenngrößen der Waage 9 ermöglicht. So kann die Einheit, in der das Meßergebnis ausgedrückt wird, beispielsweise zwischen Kilogramm (kg), Tonne (t) und pound (lb) umgeschaltet werden. Ferner läßt sich die Höchstlast beispielsweise zwischen den Werten 50, 100, 200 und 500 einstellen. Ebenso ist die Teilung mit verschiedener Feinheit einstellbar, wobei beispielsweise für die Teilung Parameterwerte von 5, 10, 20 oder 50 ausgewählt werden können. Auch ist eine Umschaltung zwischen elektrischen Filtern zur Ausmittelung der Meßwerte möglich, beispielsweise eine Umschaltung zwischen Filter 1, Filter 2 und Filter 3. Schließlich läßt sich auch die Ausgabegeschwindigkeit (Speed) der Waage 9 voreinstellen, wobei beispielsweise Ausgabegeschwindigkeiten von 1 Meßwert pro Sekunde, 2 Meßwerte pro Sekunde und 5 Meßwerte pro Sekunde zur Auswahl stehen.

Ebenso sind die Kenngrößen der Schnittstelle zwischen der Vorrichtung 1 und dem Drucker 12 einstellbar. So lassen sich für die Übertragungsgeschwindigkeit Baudraten von 1200, 2400, 4800 und 9600 wählen. Hinsichtlich einer Paritätsprüfung besteht ferner die Auswahl zwischen einer Erzeugung eines geraden Paritätsbits, eines ungeraden Paritätsbits oder überhaupt keines Paritätsbits. Wählbar ist auch die Anzahl der Bit pro Zeichen, beispielweise 6, 7 oder 8. Schließlich ist auch die Kenngröße "Hand-shake" vorgesehen, mit der die Auswahl zwischen mit oder ohne verbunden ist.

Der Drucker 12 bietet als einstellbare Kenngröße eine Auswahl zwischen unformatierter Ausgabe und formatierter Ausgabe. Die erstere besteht in einem spaltenweisen sequentiellen Ausdruck jedes einzelnen Gewichtswertes nach Lastwechsel, während letztere beispielsweise einen zeilenweisen Ausdruck von Datum, einer laufenden Nummer, eines Beizeichens, des Bruttogewichtswertes, des Taragewichtswertes und des Nettogewichtswertes beinhaltet. Schließlich kann als weitere Kenngröße das Datum mit Tag, Monat und Jahr eingestellt werden.

Die vorstehend aufgeführten fünf Kenngrößen (Einheit, Höchstlast, Teilung, Filter und Speed) der Waage 9, vier Kenngrößen (Baud, Parity, Bits/Chr und Hand-shake) der Schnittstelle zwischen der Vorrichtung 1 und dem Drucker 12 und die das Druckformat betreffende Kenngröße (Drucker) sowie das Datum betreffende Kenngröße (Datum) sind gemäß Fig. 2 in Form von schlagwortartigen Markierungen auf dem Anzeigefeld 2 angeordnet und geben damit permanent einen die jeweilige Kenngröße identifizierenden Informationsinhalt wieder. Im einzelnen sind hierzu die acht Anzeigestellen 16 des Anzeigefeldes 2 in zwei Gruppen unterteilt, von denen die eine Gruppe die fünf links stehenden und die andere Gruppe die drei rechts stehenden Anzeigestellen 16 umfaßt. Die Markierungen "Einheit", "Höchstlast", "Teilung" "Filter" und "Speed" sind jeweils unmittelbar über den oberen waagrechten Segment-Balken 17 der ersten, zweiten, dritten, vierten bzw. fünften Anzeigestelle 16 von links angeordnet. Dagegen sind die Markierungen "Drucker", "Hand-shake", "Bit/Char" "Parity" und "Baud" unmittelbar unter den unteren waagrechten Segment-Balken 17 der ersten, zweiten, dritten, vierten bzw. fünften Anzeigestelle von links angeordnet. Ferner steht die Markierung "Datum" unmittelbar links neben dem linken unteren senkrechten Segment-Balken 17 der ersten Anzeigestelle 16 von links, während darüber eine Markierung "Wägen" links neben dem linken oberen senkrechten Segment-Balken 17 der ersten Anzeigestelle 16 von links angeordnet ist. Somit sind die Markierungen den äußeren Segment-Balken 17 in der einen Gruppe von Anzeigestellen 16 zugeordnet.

Im normalen Wägebetrieb ist mit der Taste 4 die Funktion "0-Stellen", mit der Taste 5 die Funktion "Tarieren", mit der Taste 6 die Funktion "Brutto-Netto-Umschaltung" und mit der Taste 7 die Funktion "Drucken" verbunden, und der Mikroprozessor 14 steuert die Anzeigestellen 16 des Anzeigefeldes 2 derart an, daß der Brutto-, Netto- und Tarawert angezeigt werden. Durch einen bestimmten Befehl an den Mikroprozessor 14, beispielsweise durch Betätigung eines nicht dargestellten Schlüsselschalters, durch Eingabe eines Kodes oder durch Einschalten der Vorrichtung 1 bei unterbrochener Steckverbindung der Signalleitung 13 zur Waage 9, geht jedoch der Mikroprozessor 14 vom normalen Wägebetrieb in eine andere Betriebsart über, in der die nachstehend beschriebene, durch die nunmehr eine andere Funktion aufweisenden Tasten 4 bis 7 beeinflußbare Steuerungsfolge abläuft. In dieser sind die den Markierungen zugeordneten Segment-Balken 17 der einen Gruppe von Anzeigestellen 16 zu einer geschlossenen Schleife geschaltet, in der zunächst beim Aufruf dieser Betriebsart der der Markierung "Wägen" zugeordnete Segment-Balken 17 zur Anzeige angesteuert wird, wie es in Fig. 2 dargestellt ist. Durch Betätigung der unten mit dem Symbol "V" für "vorwärts" markierten Taste 4 veranlaßt der Mikroprozessor 14 einen Übergang der Ansteuerung zu dem in der Schleife nächstfolgenden Segment-Balken 17, der der Markierung "Einheit" zugeordnet ist. Durch die Ansteuerung des Segment-Balkens "Einheit" erfolgt gleichzeitig eine derartige Ansteuerung der Anzeigestellen 16 in der anderen Gruppe, daß diese nacheinander die für die Kenngröße "Einheit" zur Wahl stehenden Parameterwerte in Form von geeigneten Anzeigemustern anzeigen.

Im einzelnen kann der Steuerungsablauf derart erfolgen, daß die die wählbaren Parameter darstellenden Anzeigemuster in der anderen Gruppe von Anzeigestellen 16 nacheinander mit einer vorgegebenen Geschwindigkeit angezeigt werden, wobei durch eine Betätigung der unten mit der Markierung "Q" gekennzeichneten Quittiertaste 6 ein Auswahlsignal erzeugt wird, das zur Auswahl des gerade angezeigten Parameterwertes führt. Alternativ ist eine manuelle Weiterschaltung der Parameterwerte, d.h. der sie darstellenden Anzeigemuster in der anderen Gruppe der Anzeigestellen 16 dadurch möglich, daß die unten mit der Markierung "S" für "Switching" versehene Umschalttaste 7 betätigt wird. Hierdurch wird die wie vorstehend beschrieben zur Fortschaltung der Segment-Balken-Ansteuerung innerhalb der geschlossenen Schleife der einen Gruppe von Anzeigestellen 16 dienende Fortschalttaste 4 derart umgeschaltet, daß sie nunmehr eine manuelle Weiterschaltung der Anzeigemuster in der zweiten Gruppe der Anzeigestellen 16 bewirkt. Das gleiche gilt für die unten mit dem Symbol "R" für "rückwärts" markierte Taste 5, die in der geschlossenen Schleife der Segment-Balken die Fortschaltung in entgegengesetzter Richtung zur Fortschalttaste 4 bewirkt und nach Betätigung der Umschalttaste 7 auf die Anzeigemuster in der zweiten Gruppe der Anzeigestellen 16 entgegengesetzt zur Fortschaltrichtung der Fortschalttaste 4 wirkt.

Nachdem also beispielsweise in der anderen Gruppe der Anzeigestellen 16 zunächst der Parameterwert "kg" angezeigt wurde und nach Drücken der Taste 7 sodann mit Hilfe der Taste 4 der nächste Parameterwert "t" angezeigt wird, wird dieser Parameterwert, da er beispielsweise gewünscht wird, mit der Taste 6 quittiert. Damit erfolgt selbsttätig die Weiterschaltung der Ansteuerung in der einen Gruppe auf den in der geschlossenen Schleife nächsten Segment-Balken, der der Markierung "Höchstlast" zugeordnet ist. Gleichzeitig wirken die Fortschalttasten 4 und 5 wieder auf die geschlossene Schleife. In der anderen Gruppe der Anzeigestellen 16 erscheint als Anzeigemuster die Zahl "50" entsprechend dem ersten wählbaren Parameter für die Höchstlast. Da dieser Wert beispielsweise gewünscht wird und der erste Parameterwert als voreingestellter Default-Wert behandelt wird, kann durch Drücken der Taste 4 sogleich auf die nächste Kenngröße "Teilung" übergegangen werden.

Auf diese Weise werden sämtliche Kenngrößen auf die gewünschten Parameterwerte eingestellt. Als letzte Einstellung verbleibt die Eingabe des Datums, wobei Tag, Monat und Jahr die Parameterwerte darstellen, die durch eine schrittweise Erhöhung oder Erniedrigung der dreistelligen anderen Gruppe von Anzeigestellen 16 eingestellt werden. Nach dem Quittieren mittels der Taste 6 ist somit wieder der der Markierung "Wägen" zugeordnete Segment-Balken zur Anzeige angesteuert. Durch Drücken der Taste 4 kann die Ansteuerung innerhalb der geschlossenen Schleife nochmals durchlaufen werden, wobei in der anderen Gruppe der Anzeigestellen 16 die eingestellten Parameterwerte nochmals angezeigt werden und dadurch eine Kontrolle möglich ist.

Werden bei dieser Kontrolle alle Einstellungen für in Ordnung befunden, wird die Quittiertaste 6 bei angesteuertem Segment-Balken "Wägen" betätigt, wodurch Speichersignale erzeugt werden, die den Mikroprozessor 14 dazu veranlassen, eine geeignete Darstellung der Kenngrößen und der für diese ausgewählten Parameterwerte in einer in Fig. 3 mit dem Bezugszeichen 20 gekennzeichneten Speichereinrichtung in nichtflüchtiger Weise abzuspeichern und und in die eigentliche Wägebetriebsart überzugehen.

Bei dem vorstehend beschriebenen Ausführungsbeispiel werden die Parameterwerte in der anderen Gruppe von Anzeigestellen 16 in alphanumerischer Form angezeigt. Statt dessen ist jedoch ähnlich wie bei der einen Gruppe von Anzeigestellen auch hier eine Zuordnung von die einzelnen Parameter kennzeichnenden Markierungen zu einzelnen Segment-Balken der Anzeigestellen 16 möglich. Statt einer Segment-Balken-Anzeige können auch andere Sichtanzeigen verwendet werden, die einzelne Anzeigeelemente aufweisen, welche ähnlich den Segment-Balken ansteuerbar sind.

Bei dem vorstehend beschriebenen Ausführungsbeispiel können die die einzelnen Kenngrößen schlagwortartig wiedergebenden Markierungen auf einer Maske angeordnet sein, die an dem Anzeigefeld 2 angebracht wird. Dies ist vor allem dann zweckmäßig, wenn die Zahl der Kenngrößen sehr groß ist. In diesem Fall würde eine erste Maske nur wenige übergeordnete Kenngrößen aufweisen und die Ansteuerung durch den Mikroprozessor 14 derart erfolgen, daß bei einer Anwahl einer dieser Kenngrößen ein Sprung in eine zweite Steuerebene erfolgt, in der eine neue Zuordnung von anderen Kenngrößen zu den ansteuerbaren Segment-Balken gegeben ist, so daß eine weitere Maske mit entsprechend anderen Markierungen anzubringen wäre. Auf die gleiche Weise kann dieser Steuerablauf über weitere Ebenen fortgesetzt werden. Die Zahl der ansteuerbaren Segment-Balken oder Anzeigeelemente kann in den verschiedenen Ebenen verschieden sein. Insbesondere können die nachgeordneten Ebenen zusätzlich eine Aussprungmöglichkeit der Steuerfolge in die erste Ebene aufweisen.

In den vorstehenden Ausführungsbeispielen ist die Anwendung der Vorrichtung 1 im Zusammenhang mit einer Waage beschrieben. Man erkennt jedoch ohne weiteres, daß sie für jedes Gerät, insbesondere Meßgerät, eingesetzt werden kann, bei dem eine Konfigurierung, d.h. Voreinstellung erwünschter Parameterwerte für verschiedene Kenngrößen erforderlich ist.

Wie in der vorstehenden Beschreibung hervorgehoben worden ist, ist die elektronische Wägeeinrichtung modular aus Bausteinen aufgebaut, wobei in dem dargestellten Ausführungsbeispiel ein Baustein durch die Waage 9 und ein weiterer Baustein durch den Drucker 12 gebildet ist. Jeder dieser Bausteine ist mit einer digitalen Schnittstelle versehen, die die den Informationsinhalten entsprechenden Ausgangssignale jedes Bausteins in normierter, digitaler Form liefert. Hierdurch ist es möglich, die Daten- und Befehlsflüsse von und zu den Bausteinen vom jeweiligen physikalischen Prinzip des einzelnen Bausteins unabhängig zu machen. Beispielsweise ist sodann das Ausgangssignal der Waage 9 unabhängig vom physikalischen Prinzip des Lastfühlers 11, der etwa nach dem Saitenzellenprinzip, Dehnungsmeßstreifenprinzip oder elektrodynamischen Prinzip arbeiten kann. Dies bedeutet, daß der Baustein einen im wesentlichen fertig kalibrierten Meßwert liefert, der an der genormten Schnittstelle in digitaler Form zur Verfügung steht. Dies führt zu einer einfachen und überschaubaren Struktur der einzelnen Bausteine und ihrer einstellbaren Parameter, so daß die Einfachheit und Übersichtlichkeit des Einstellvorgangs hierdurch begünstigt wird.

In diesem Zusammenhang ist jedem Baustein ein Erkennungscode zugeordnet, der eine selektive Anwahl der Bausteine ermöglicht. Auch weist die Schnittstelle des Bausteins einen Eingang für normierte Steuerbefehle auf, durch die die vorgesehene Voreinstellung, wie Höchstlasteinstellung, Teilungseinstellung, Baudrateneinstellung u.dgl., in den verschiedenen Bausteinen ausgelöst wird.

Die verschiedenen Bausteine 9, 12 sind gemäß Fig. 1 und 3 über ihre Schnittstelle mit dem Mikroprozessor 14 gekoppelt, der in der vorstehend beschriebenen Weise den Daten- und Befehlsfluß von bzw. zu den Bausteinen 9, 12 steuert.

## Patentansprüche

1. Vorrichtung zur Sichtdarstellung von Informationsinhalten auf einem eine Mehr-Segment-Balken-Anzeige mit einem Block von mehreren in einer Zeile angeordneten, alphanumerischen Sieben-Segment-Anzeigestellen (16) aufweisenden Anzeigefeld, bei der die Segment-Balken in Abhängigkeit von den anzuzeigenden Informationsinhalten selektiv zu deren Anzeige ansteuerbar sind, wobei einzelnen Segment-Balken (17) auf dem Anzeigefeld (2) je eine einen bestimmten Informationsinhalt darstellende, permanente Markierung zugeordnet und jeweils der der entsprechenden Markierung zugeordnete Segment-Balken (17) zur Anzeige des ihr entsprechenden Informationsinhaltes ansteuerbar ist, **dadurch gekennzeichnet,** daß die Markierungen den den Block nach außen begrenzenden Segment-Balken (17) der Sieben-Segment-Anzeigestellen (16) zugeordnet sind.

2. Vorrichtung nach Anspruch 1, **dadurch gekennzeichnet,** daß die permanenten Markierungen auf einer an der Mehr-Segment-Balken-Anzeige auswechselbar angebrachten Maske angeordnet sind.

3. Vorrichtung nach Anspruch 1 oder 2, **dadurch gekennzeichnet,** daß die den Markierungen zugeordneten Segment-Balken (17) in einer geschlossenen Schleife geschaltet sind, in der die Ansteuerung von einem Segment-Balken (17) zu dem in der Schleife benachbarten Segment-Balken (17) durch ein Fortschaltsignal weiterschaltbar ist.

4. Vorrichtung nach einem der Ansprüche 1 bis 3, **dadurch gekennzeichnet,** daß die Anzeigestellen (16) der Sichtanzeige in mindestens zwei Gruppen unterteilt sind, in deren einer die jeweils einer permanenten Markierung zugeordneten Segment-Balken (17) vorgesehen sind und in deren anderer die Ansteuerung der Segment-Balken (17) gemaß in Abhängigkeit von dem gerade angesteuerten, einer der Markierungen zugeordneten Segment-Balken der einen Gruppe vorgegebenen Anzeigemustern erfolgt.

5. Vorrichtung nach einem der Ansprüche 1 bis 4, mit einer mit der Sichtanzeige gekoppelten Eingabetastatur, **dadurch gekennzeichnet,** daß die Eingabetastatur (8) eine Fortschalttaste (4, 5) aufweist, durch die die Ansteuerung von einem der einer Markierung zugeordneten Segment-Balken (17) zu einem nächsten solchen Segment-Balken (17) weiterschaltbar ist.

6. Vorrichtung nach Anspruch 5, **dadurch gekennzeichnet,** daß die Eingabetastatur (8) eine Quittiertaste (6) aufweist, durch die ein Auswahlsignal für das auf der anderen Gruppe der Anzeigestellen (16) gerade angezeigte Anzeigemuster erzeugbar ist.

7. Vorrichtung nach einem der Ansprüche 4 bis 6, **dadurch gekennzeichnet,** daß die Ansteuerung der vorgegebenen Anzeigemuster der anderen Gruppe von Anzeigestellen (16) nacheinander mit einer vorgegebenen Geschwindigkeit erfolgt.

8. Vorrichtung nach einem der Ansprüche 5 bis 7, **dadurch gekennzeichnet,** daß die Eingabetastatur (8) eine Umschalttaste (7) aufweist, durch die die Fortschalttaste (4, 5) zwischen ihrem der Weiterschaltung in der ersten Gruppe der Anzeigestellen (16) dienenden Betriebszustand und einem der Weiterschaltung zwischen den in der zweiten Gruppe der Anzeigestellen (16) vorgesehenen Anzeigemustern dienenden Betriebszustand umschaltbar ist.

9. Vorrichtung nach einem der Ansprüche 6 bis 8, **dadurch gekennzeichnet,** daß eine Speichereinrichtung (20) vorgesehen ist, in der jeweils ein den in der einen Gruppe der Anzeigestellen (16) angesteuerten Segment-Balken darstellendes Speichersignal zusammen mit einem dem durch das Auswahlsignal angewählten Anzeigemuster der anderen Gruppe der Anzeigestellen (16) entsprechenden weiteren Speichersignal einspeicherbar ist.

10. Vorrichtung nach Anspruch 9, dadurch gekennzeichnet, daß die Sichtanzeige mit einer Waage (9) gekoppelt ist, in deren verschiedenen Bausteinen jeweils eine Anzahl von Parameterwerten einstellbar ist, und daß auf der ersten Gruppe der Anzeigestellen (16) der jeweils zur Einstellung angewählte Baustein und auf der zweiten Gruppe der Anzeigestellen (16) der jeweils auswählbare Parameterwert angezeigt wird.

11. Vorrichtung nach einem der Ansprüche 1 bis 10, mit einem modularen Aufbau aus einzelnen, den Informationsinhalten entsprechende Ausgangssignale liefernden Bausteinen, **dadurch gekennzeichnet,** daß jeder Baustein (9, 12) eine digitale Schnittstelle aufweist, die die Ausgangssignale in normierter digitaler Form liefert.

12. Vorrichtung nach Anspruch 11, **dadurch gekennzeichnet,** daß jedem Baustein ein Erkennungskode zugeordnet ist, durch den der Baustein (9, 12) selektiv ansprechbar ist.

13. Vorrichtung nach Anspruch 11 oder 12, **dadurch gekennzeichnet,** daß die Schnittstelle des Bausteins (9, 12) einen Eingang für normierte Steuerbefehle aufweist.

14. Vorrichtung nach einem der Ansprüche 11 bis 13, **dadurch gekennzeichnet,** daß die Bausteine (9, 12) über ihre Schnittstelle mit einem den Daten- und Befehlsfluß steuernden Mikroprozessor (14) gekoppelt sind.

## Claims

1. A device for visually displaying information contents on a display field which has a multi-segment-bar-display with a block of several alphanumerical seven segment display digits (16) arranged in a line, in which device the segment-bars can, in dependence on the information contents to be displayed, be selectively controlled for the display thereof, wherein a respective permanent marker representing a particular information content is associated with individual segment-bars (17) on the display field (2), and in each case the segment-bar (17) associated with the corresponding marker can be controlled to display the information contents corresponding thereto, **characterised in that** the markers are associated with the segment-bars (17) of the seven-segment display digits (16) which delimit the block externally.

2. A device according to claim 1, **characterised in that** the permanent markers are arranged on a mask attached to the multi-segment-bar-display such that it can be exchanged.

3. A device according to claim 1 or 2, **characterised in that** the segment-bars (17) associated with the markers are connected in a closed loop, in which the control can be relayed from one segment-bar (17) to the segment-bar (17) adjacent in the loop through an advancing signal.

4. A device according to one of claims 1 to 3, **characterised in that** the display digits (16) of the visual display are subdivided into at least two groups, in one of which there are provided segment-bars (17) associated with a respective permanent marker, and in the other of which the control of the segment-bars (17) is achieved according to display patterns specified depending on the segment-bar of the one group, associated with one of the markers, which has just been controlled.

5. A device according to one of claims 1 to 4, with an input keyboard connected to the visual display, **characterised in that** the input keyboard (8) has an advancing key (4, 5), by means of which the control of one segment-bar (17) associated with one marker can be relayed to the next such segment-bar (17).

6. A device according to claim 5, **characterised in that** the input keyboard (8) has an accept key (6), by means of which a selection signal is able to be produced for the display pattern which has just been displayed on the other group of display digits (16).

7. A device according to one of claims 4 to 6, **characterised in that** the control of the specified display pattern of the other group of display digits (16) is achieved successively with a specified speed.

8. A device according to one of claims 5 to 7, **characterised in that** the input keyboard (8) has a shift key (7), by means of which the advancing key (4, 5) can be changed over between its operating state which serves as a relay in the first group of display digits (16) and an operating state which serves as a relay between the display patterns provided in the second group of the display digits (16).

9. A device according to one of claims 6 to 8, **characterised in that** a memory device (20) is provided in which in each case a memory signal representing the segment-bar controlled in the one group of display digits (16) can be stored together with a further memory signal corresponding to the display pattern of the other group of display digits (16) selected by the selection signal.

10. A device according to claim 9, **characterised in that** the visual display is connected to a balance (9), In whose various modules a number of parameter values can be adjusted in each case, and in that the module, which has been respectively selected for adjustment, is displayed on the first group of display digits (16), and the parameter value, which can be respectively selected, is displayed on the second group of display digits (16).

11. A device according to one of claims 1 to 10, with a modular construction comprising individual modules delivering output signals corresponding to the information contents, **characterised in that** each module (9, 12) has a digital interface, which delivers the output signals in standard digital form.

12. A device according to claim 11, **characterised in that** a recognition code, by means of which the module (9, 12) can be selectively addressed, is associated with each module.

13. A device according to claim 11 or 12, **characterised in that** the interface of the module (9, 12) has an input for standard control commands.

14. A device according to one of claims 11 to 13, **characterised in that** the modules (9, 12) are connected by way of their interface to a microprocessor (14) controlling the flow of data and commands.

## Revendications

1. Dispositif de visualisation de contenus d'informations sur une zone d'affichage présentant un affichage de barres à segments multiples avec un bloc de plusieurs emplacements d'affichage à sept segments alphanumériques (16) disposés en ligne dans lequel les barres à segments peuvent être commandées en fonction des contenus d'information à afficher sélectivement pour l'affichage de ceux-ci, aux différentes barres à segment (17) étant associées sur la zone d'affichage (2) un marquage permanent, respectivement, représentant un contenu d'informations défini, et à chaque fois la barre à segments (17) associée au marquage correspondant peut être commandée pour l'affichage du contenu d'informations correspondant à celui-ci, caractérisé en ce que les marquages sont affectés aux barres à segments (17) limitant le bloc vers l'extérieur des emplacements d'affichage à sept segments (16).

2. Dispositif selon la revendication 1, caractérisé en ce que les marquages permanents sont disposés sur un masque appliqué de façon échangeable sur l'affichage de barres à segments.

3. Dispositif selon l'une des revendications 1 ou 2, caractérisé en ce que les barres à segments (17) affectées aux marquages sont montées dans un circuit fermé dans lequel l'excitation d'une barre à segments (17) à la barre à segments (17) voisine dans le circuit est transférable par l'intermédiaire d'un signal d'avancement.

4. Dispositif selon l'une des revendications 1 à 3, caractérisé en ce que les emplacements d'affichage (16) de l'affichage visuel sont subdivisés en au moins deux groupes dans l'un desquels sont prévus les barres à segments (17) affectées respectivement à un marquage permanent et dans l'autre desquels l'excitation des barres à segments (17) a lieu selon des modèles d'affichage prédéfinis en fonction de la barre à segments de l'un des groupes affecté au marquage qui est justement excité.

5. Dispositif selon l'une des revendications 1 à 4, comprenant un clavier d'entrée couplé à l'affichage visuel, caractérisé en ce que le clavier d'entrée (8) présente une touche d'avancement (4,5) grâce à laquelle l'excitation est transférable d'une barre à segments (17) affectée à un marquage à une barre à segments (17) analogue suivante.

6. Dispositif selon la revendication 5, caractérisé en ce que le clavier d'entrée (8) présente une touche de confirmation d'ordre (6) grâce à laquelle un signal de sélection peut être produit pour le modèle d'affichage justement affiché sur l'autre groupe des emplacements d'affichage (16).

7. Dispositif selon l'une des revendications 4 à 6, caractérisé en ce que l'excitation des modèles d'affichage prédéfinis de l'autre groupe d'emplacements d'affichage (16) a lieu successivement avec une vitesse prédéfinie.

8. Dispositif selon l'une des revendications 5 à 7, caractérisé en ce que le clavier d'entrée (8) présente une touche de commutation (7) grâce à laquelle la touche d'avancement (4, 5) est commutable entre son état de fonctionnement servant au transfert dans le premier groupe des emplacements d'affichage (16) et un état de fonctionnement servant au transfert entre les modèles d'affichage prévus dans le deuxième groupe des emplacement d'affichage (16).

9. Dispositif selon l'une des revendications 6 à 8, caractérisé en ce qu'il est prévu un dispositif de mémorisation (20) dans lequel chaque fois un signal de mémorisation représentant une barre à segments excitée dans l'un des groupes des emplacements d'affichage (16) est mémorisable conjointement avec un autre signal de mémorisation correspondant au modèle d'affichage de l'autre groupe des emplacements d'affichage (16) choisi grâce au signal de sélection.

10. Dispositif selon la revendication 9, caractérisé en ce que l'affichage est relié à une balance (9) dans chacun des différents éléments constitutifs de laquelle un certain nombre de valeurs de paramètre sont réglables, et en ce qu'il est affiché sur le premier groupe des emplacements d'affichage (16) l'élément constitutif sélectionné respectivement pour le réglage et sur le deuxième groupe des emplacements d'affichage (16) la valeur de paramètre qui peut être sélectionnée à chaque fois.

11. Dispositif selon l'une des revendications 1 à 10, avec une construction modulaire d'éléments constitutifs individuels délivrant des signaux de sortie correspondant aux contenus d'information, caractérisé en ce que chaque élément constitutif (9, 12) présente une interface numérique qui délivre les signaux de sortie sous forme numérique normalisée.

12. Dispositif selon la revendication 11, caractérisé en ce qu'à chaque élément constitutif est affecté un code d'identification grâce auquel l'élément constitutifs (9, 12) peut être déclenché sélectivement.

13. Dispositif selon la revendication 11 ou 12, caractérisé en ce que l'interface de l'élément constitutif (9, 12) présente une entrée pour des instructions de commande normalisées.

14. Dispositif selon l'une des revendications 11 à 13, caractérisé en ce que les éléments constitutifs (9, 12) sont reliés par l'intermédiaire de leur interface à un microprocesseur (14) qui commande le flux de données et d'instructions.
